(19) Europäisches Patentamt / European Patent Office / Office européen des brevets

(11) **EP 2 112 602 A2**

(12) **EUROPEAN PATENT APPLICATION**

(43) Date of publication:
**28.10.2009 Bulletin 2009/44**

(51) Int Cl.:
***G06F 17/12*** *(2006.01)*

(21) Application number: **09251173.2**

(22) Date of filing: **24.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **25.04.2008 US 109540**

(71) Applicant: **Intel Corporation**
**Santa Clara, CA 95052 (US)**

(72) Inventors:
• **Myaskouvskey, Artiom**
**Haifa 32205 (IL)**
• **Gueron, Shay**
**Haifa 32714 (IL)**

(74) Representative: **Beresford, Keith Denis Lewis**
**BERESFORD & Co.**
**16 High Holborn**
**London**
**WC1V 6BX (GB)**

(54) **Device, system, and method for solving systems of linear equations using parallel processing**

(57) A method, apparatus and system for multiplying a matrix by a vector, for example, video interpolation (other applications are contemplated). The matrix may be a representation of a large and sparse system of linear equations. The large and sparse system of linear equations may be used to estimate motion between frames of a video file for converting frame rates. The vector may be a first estimation of a solution to the system of linear equations. The matrix may be multiplied by elements of the vector in an order different from the order in which the elements are arranged in the vector. Elements in the vector may be multiplied in parallel. A second vector estimation of the solution to a system of linear equations may be a product of the multiplying. The solution to the system of linear equations may be set, for example, when the first and second vector estimations differ by less than a predetermined amount. Other embodiments are described and claimed.

Receive Input File Having Frame Rate Different Than Output Frame Rate — 500

Initiate Solving System of Linear Equations $Ax = b$ — 505

Generate Matrix A, Vector b, and First Estimation of Solution to System of Linear Equations Vector $x_1$ — 510

Multiply $A$ by $x_1$, Elements of $x_1$ Multiplied In An Order Different From The Order In Which The Elements Are Arranged In $x_1$. — 515

Generate Second Vector $x_2$ Estimation of Solution to System of Linear Equations — 520

Determine Difference Between First and Second Vector Estimations $x_1$ and $x_2$ — 525

Difference Too Large Set $x_2 = x_1$

Difference Small

Set Solution to System of Linear Equations — 530

Generate Interpolated Frames Using Solution to System of Linear Equations — 535

Output Video File at Appropriate Output Frame Rate — 540

Store Video File at Output Frame Rate — 545

Fig. 5

EP 2 112 602 A2

Description

FIELD OF THE INVENTION

The present invention relates to iterative methods for solving systems of linear equations that may be used, for example, to estimate motion between frames in a video file for converting frame rates.

BACKGROUND

A video input file may have a specific frame rate. A device for outputting (e.g., playing) the file may have a different frame rate. For example a 50Hz video file may be input into a television that plays videos at a frame rate of 104Hz. When the frame rate of an input file differs from the frame rate of an output file a need may exist to make the frame rates compatible.

Frame rate conversion algorithms have been developed for changing the rate at which frames are displayed. Frame rate conversion algorithms may, for example, increase or decrease the number of frames per time period for speeding up or slowing down the input frame rate, respectively, without altering the total time for the video presentation or the perceived speed of the presentation. Some basic algorithms may simply replicate or eliminate frames. Others may interpolate the motion between frames using, for example, using a motion compensation algorithm.

Motion estimation in video may be modeled, for example, by (Partial)-Differential-Equations (PDEs). A discretization scheme (e.g., finite differencing) may be applied to the PDE for finding the numerical solution thereof. The discretization may generate a system of linear equations, such as a large and sparse system of linear equations (LSSLE). Each LSSLE may describe the change or motion between each frame in a pair of frames. Frame rate conversion algorithms may use numerical solutions for the LSSLE, for example, for generating the frame rate conversions. The LSSLE is known in many fields of science and engineering, such as, electrical engineering, fluid dynamics, computer vision/graphics, optical flow estimation, super-resolution, and image-noise reduction.

Solving the LSSLE may be computationally intensive. For example, solving the LSSLE for converting a frame rate for a set of frames may take longer than the playing time of the frames. While the player is waiting for the converted frames, there may be a lag in the playback rate. To compensate for this lag, a frame rate conversion-algorithm may reduce the quality of the video by generating fewer frames and/or frames having degraded motion estimation. This may result in a more "jerky" video.

BRIEF DESCRIPTION OF THE DRAWINGS

The subject matter disclosed in this application is particularly pointed out and distinctly claimed in the concluding portion of the specification. Embodiments of the invention, however, both as to organization and method of operation, together with objects, features and advantages thereof, may best be understood by reference to the following detailed description when read with the accompanied drawings in which:

Fig. 1 is a schematic illustration of a system according to an embodiment of the invention;
Fig. 2 is a schematic illustration of a processor pipeline according to an embodiment of the invention;
Fig. 3 is a schematic illustration of the rearrangement of entries from a vector x having an initial ordering to vector *x'* having a new ordering according to an embodiment of the invention;
Figs. 4A and 4B show matrices representing a vector x having an initial order and a vector *x'* having a new order, respectively, according to an embodiment of the invention; and
Fig. 5 is a flow chart of a method according to an embodiment of the present invention.

It will be appreciated that for simplicity and clarity of illustration, elements shown in the drawings have not necessarily been drawn accurately or to scale. For example, the dimensions of some of the elements may be exaggerated relative to other elements for clarity or several physical components included in one functional block or element. Further, where considered appropriate, reference numerals may be repeated among the drawings to indicate corresponding or analogous elements. Moreover, some of the blocks depicted in the drawings may be combined into a single function.

DETAILED DESCRIPTION

In the following detailed description, numerous specific details are set forth in order to provide a thorough understanding of embodiments of the invention. However it will be understood by those of ordinary skill in the art that embodiments of the present invention may be practiced without these specific details. In other instances, well-known methods, procedures, components and circuits have not been described in detail so as not to obscure the description.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

Embodiments of the present invention may be used in a variety of applications. Although the present invention is not limited in this respect, the circuits and techniques disclosed herein may be used in many apparatuses such as personal computers (PCs), image or video playback devices, digital video disk (DVD) players, wireless devices or stations, video or digital game devices or systems, image collection systems, processing systems, visualizing or display systems, digital display systems, communication systems, and the like.

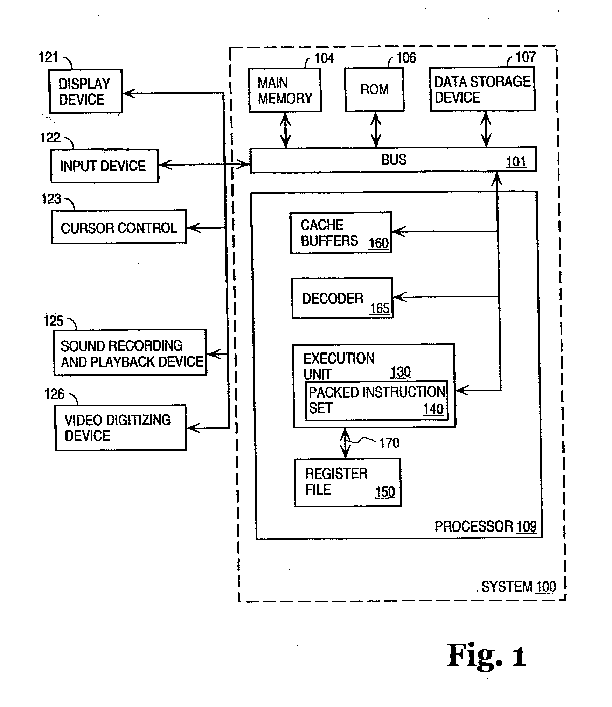

Embodiments of the invention may be used, for example, in systems that input video at a first frame rate and output video at a second frame rate. The playing time or perceived playing time may remains the same, but the number of frames displayed per time unit may change. Embodiments of the invention may convert from the first frame rate to the second frame rate. The frame rate conversion may include interpolating intermediary frames, for example, by solving LSSLEs. Embodiments of the invention may operate on, for example, a computer system to execute packed instructions, for example, as described in Fig. 1.

Reference is made to Fig. 1, which schematically illustrates a computer system 100 according to an embodiment of the invention. Computer system 100 is an example of one type of computer system that can be used with embodiments of the present invention. Other types of computer systems, not shown, that are configured differently, may also be used with embodiments of the present invention. Computer system 100 may include one or more bus(es) 101 and/or point-to-point interconnections, or other internal communications hardware and software, for transferring information, and a processor 109 coupled to the bus 101 or point-to-point interconnections for processing information. Processor 109 may have a single-core, multi-core, or a symmetric multiprocessing architecture.

Processor 109 may be for example a central processing unit (CPU) or multiple processors having any suitable architecture. In one embodiment, the architecture may include a streaming SIMD extensions (SSE) (e.g., SSE4.2 or other SSE4 instruction set, as described in Intel® SSE4 Programming Reference, published April 2007), which is a single instruction multiple data (SIMD) instruction set extension. The SSE architecture may execute packed instructions, in parallel, on a plurality (e.g., 4) of data points. In another embodiment, the Intel® Advanced Vector Extension (AVX) to the SSE architecture (e.g., as described in Intel® Advanced Vector Extension Programming Reference, published March 2008), may be used for executing packed instructions, in parallel, on other numbers of data points (e.g., 8 or 16 data points). The processor 109 may have a complex instruction set computing (CISC) architecture or reduced instruction set computing (RISC) architecture.

Processor 109 may include an execution unit 130, a register file 150, a cache hierarchy 160, a decoder 165, and an internal bus 170. The register file 150 may include a single register file including multiple architectural registers or may include multiple register files, each including multiple architectural registers. Other registers may be used.

Computer system 100 may include a random access memory (RAM), a dynamic RAM (DRAM), or other dynamic storage device in main memory 104 coupled to the bus 101 for storing information and instructions to be executed by the processor 109. Main memory 104 may be used for storing temporary variables or other intermediate information during execution of instructions by processor 109. Computer system 100 may include a read only memory (ROM) 106, or other static storage device, coupled to the bus 101 for storing static information and instructions for the processor 109.

A data storage device 107, such as a magnetic disk or optical disk and a corresponding disk drive, may be coupled to the bus 101. The computer system 100 may be coupled via the bus 101 to a display device 121 for displaying information to a user of the computer system 100. Display device 121 can include a frame buffer, specialized graphics rendering devices, a cathode ray tube (CRT), or a flat panel display, but the invention is not so limited. An alphanumeric input device 122, such as a keyboard, including alphanumeric and other keys, may be coupled to the bus 101 for communicating information and command selections to the processor 109. A cursor control 123 including a mouse, a trackball, a pen, a touch screen, or cursor direction keys for communicating direction information and command selections to the processor 109, and for controlling cursor movement on the display device 121 may be included. The computer system 100 can be coupled to a device for sound recording and playback 125. The sound recording may be accomplished using for example an audio digitizer coupled to a microphone, and the sound playback may be accomplished using for example a headphone or a speaker which is coupled to a digital to analog (D/A) converter for playing back the digitized sounds, but the invention is not so limited.

The computer system 100 can function as a terminal in a computer network, wherein the computer system 100 is a computer subsystem of a computer network, but the invention is not so limited. The computer system 100 may further include a video digitizing device 126. The video digitizing device 126 can be used to capture video images that can be transmitted to other computer systems coupled to the computer network.

In one embodiment, the processor 109 may support an instruction set which is compatible with the x86 and/or x87 instruction sets, the instruction sets used by microprocessors such as the Intel® Core™ 2 Duo processors manufactured by Intel Corporation of Santa Clara, Calif. Thus, in one embodiment, the processor 109 supports all the operations supported in the Intel Architecture (IA.TM.), as defined by Intel Corporation of Santa Clara, Calif. See Microprocessors, IA-32 Intel® Architecture Software Developer's Manual (Volume 3: System Programming Guide), published April 2005. As a result, the processor 109 may support existing x86 and/or x87 operations in addition to other operations. Embodiments of the invention may use or be incorporated into other instruction sets.

The execution unit 130 may be used for executing instructions received by the processor 109. In addition to recognizing instructions that may be implemented in general purpose processors, the execution unit 130 may recognize instructions in such as SIMD, packed or other instructions, such as a packed instruction set 140 for performing operations on packed data formats. In one embodiment, the packed instruction set 140 may include instructions for supporting packed and/or scalar operations or floating point instructions, such as, packed add operations, packed subtract operations, packed multiply operations, packed shift operations, packed compare operations, multiply-add operations, multiply-subtract operations, population count operations, and a set of packed logical operations, but the invention is not so limited. The set of packed data logic operations of one embodiment may include, for example, ANDPS, ORPS, XORPS, and ANDNPS, but the invention is not so limited. The set of packed arithmetic operations of one embodiment may include, for example, ADDPS, SUBPS, MULPS, DIVPS, RCPPS, SQRTPS, MAXPS, MINPS, and RSQRTPS, but the invention is not so limited. The set of packed data movement operations of one embodiment may include, for example, packed MOVPS, MOVAPS, MOVUPS, MOVLPS, MOVHPS, MOVLHPS, and MOVHLPS, but the invention is not so limited. While one embodiment is described wherein the packed instruction set 140 includes these instructions, alternative embodiments may include a subset or a super-set of these instructions.

These instructions provide for performance of the operations required by many of the algorithms used in multimedia applications that use packed data. Thus, these algorithms may be written to pack the necessary data and perform the necessary operations on the packed data, without requiring the packed data to be unpacked in order to perform one or more operations on one data element at a time. The execution unit 130 may be coupled to the register file 150 using for example an internal bus 170. Other types of bussing or data transfer systems, such as point-to-point systems, may be used. The register file 150 represents a storage area on the processor 109 for storing information, including data. Furthermore, the execution unit 130 may be coupled to a cache hierarchy 160 and a decoder 165. The cache hierarchy 160 is used to cache data and control signals from, for example, the main memory 104. The decoder 165 is used for decoding instructions received by the processor 109 into control signals and microcode entry points. In response to these control signals and microcode entry points, the execution unit 130 performs the appropriate operations. For example, if an add instruction is received, the decoder 165 causes execution unit 130 to perform the required addition; if a subtract instruction is received, the decoder 165 causes the execution unit 130 to perform the required subtraction. Thus, while the execution of the various instructions by the decoder 165 and the execution unit 130 is represented by a series of if/then statements, the execution of an instruction of one embodiment does not require a serial processing of these if/then statements.

The register file 150 may be used for storing information, including control and status information, scalar data, integer data, packed integer data, and packed floating point data. In one embodiment, the register file 150 may include memory registers, control and status registers, scalar integer registers, scalar floating point registers, packed single precision floating point registers, packed integer registers, and an instruction pointer register coupled to the internal bus 170, but the invention is not so limited.

In one embodiment, the scalar integer registers are 32-bit registers, the packed single precision floating point registers are 128-bit registers, and the packed integer registers are 64-bit registers, but the invention is not so limited. The SSE instruction set may use, for example, eight 128-bit registers known as xmm0 through xmm7. An additional eight 128-bit registers known as xmm8 through xmm15 may be used for the SSE instruction set. For example, xmm0 may hold four entries for a vector b, xmm1 through xmm4 may hold four entries for each of four data points of a vector x, and each of xmm5 through xmm8 may hold four corresponding coefficient terms of matrix A. The SE instruction set may process multiple (e.g., four) data points of a vector x, in parallel, by concurrently multiplying the coefficient terms of matrix A thereby. For example, eight xmm registers (e.g., xmm0-xmm7) may be used (e.g., on a 32-bit platform) and/or sixteen xmm registers (e.g., xmm0-xmm15) may be used (e.g., on a 64-bit platform). An additional 32-bit control/status register, for example, MXCSR, may be used. Each register may pack together four 32-bit single-precision floating point numbers. Integer SIMD operations may be performed with the eight 64-bit MMX registers. Other instruction sets and register sizes may be used. Another instruction set (e.g., the SSE AVX instruction set) for executing 8 data points in parallel may be used. The instruction set may use, for example, twelve 256-bit registers, which may be called, for example, ymm0 through ymm10 and ERR_YMM. The larger (e.g., 256-bit) register may enable, for example, ymm0 to hold eight entries for vector b, ymm1 through ymm4 to hold eight entries for ach of eight data points of a vector x and each of ymm4 through ymm7 to hold eight corresponding coefficient terms of matrix A. For example, twelve ymm registers (e.g., ymm0 to ymm10 and ERR_YMM) may be used. Other registers, numbers, sizes, and types may be used.

In one embodiment, the packed integer registers are aliased onto the same memory space as the scalar floating point registers. Separate registers are used for the packed floating point data. In using registers of register file 150, the processor 109, at any given time, treats the registers as being stack referenced floating point registers or non-stack referenced packed integer registers. In this embodiment, a mechanism is included to allow the processor 109 to switch between operating on registers as stack referenced floating point registers and non-stack referenced packed data registers. In another such embodiment, the processor 109 may concurrently operate on registers as non-stack referenced floating point and packed data registers. Furthermore, in an alternate embodiment, these same registers may be used for storing scalar integer data.

Alternative embodiments may contain different sets of registers. For example, an alternative embodiment may include separate registers for the packed integer registers and the scalar data registers. An alternate embodiment may include a first set of registers, each for storing control and status information, and a second set of registers, each capable of storing scalar integer, packed integer, and packed floating point data.

Further, while specific types of processor and instruction set architectures are described, embodiments of the invention may work with other types of processors, architectures, and instruction sets.

The registers of the register file 150 may be implemented to include different numbers of registers and different size registers. For example, in one embodiment, the integer registers may be implemented to store 32 bits, while other registers are implemented to store 128 bits, wherein all 128 bits are used for storing floating point data while only 64 are used for packed data. In an alternate embodiment, the integer registers each contain 32 or 64 bits.

Embodiments of the present invention may include the execution unit 130 executing instructions in one or more packed instruction sets 140 by the processor 109 (e.g., for executing 4, 8, and/or 16 data points in parallel). The instruction set 140 may be used to find solutions to one or more equations, such as, LSSLEs. The solutions to the LSSLE may be used for example frame rate conversion for altering the frame rate of an input file to be compatible with the frame rate of an output file, storage device, storage format or display device. The input file may be stored and/or received from an input device, such as, main memory 104, ROM 106, data storage 107, sound recording and playback 125, and/or input device 122 via bus 101. The output file may be used or broadcast by an output device, such as for example, sound recording and playback 125 or display device 121.

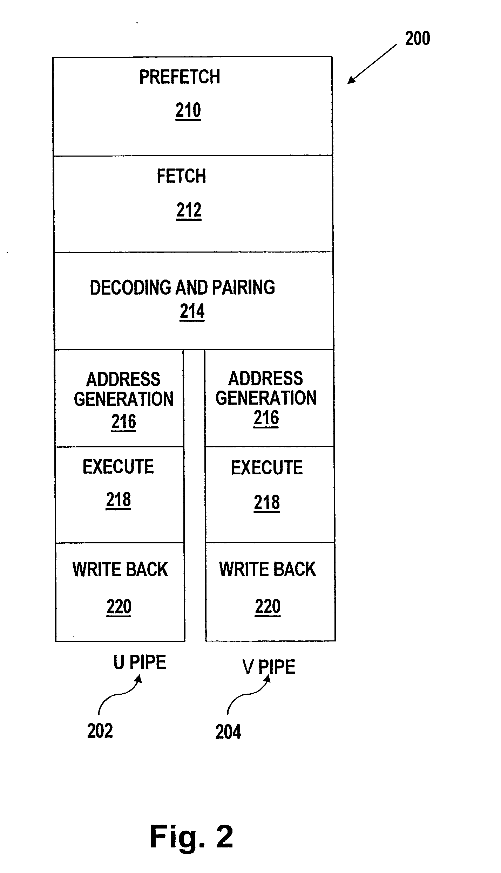

Reference is made to Fig. 2, which schematically illustrates a processor pipeline 200 according to an embodiment of the invention. Processor pipeline 200 may include a dual data pipeline including a U-pipe 202 and a V-pipe 204. In other embodiments, processor pipeline 200 may include have a single pipeline, or more than two pipelines. Using SIMD instructions, processor pipeline 200 may process, in parallel, multiple (e.g., 4, 8, and/or 16) data points (e.g., elements of a vector solution to a system of linear equations) using each data pipeline. During the decoding of any given instruction (e.g., for processing multiple data points), the next two instructions may be checked, and if possible, they are issued such that the first one may execute in the U-pipe 202 and the second in the V-pipe 204. If it is not possible to pair two instructions, the next instruction may be issued to the U-pipe 202 and typically no instruction is issued to the V-pipe 204 (e.g., or vice-versa). When instructions execute in the U-pipe 202 and the V-pipe 204, their behavior may be the same as if they were executed sequentially. The processor 109 (Fig. 1) micro-architecture may include stages such as instruction prefetch 210, instruction fetch 212, instruction decoding, pairing, and dispatch 214, address generation 216, operand read and execution 218, and writeback 220. Instruction decode logic decodes, schedules, and issues the instructions at a rate of up to two instructions per clock cycle; in other embodiments different rates may be used.

The LSSLE may be represented for example in a matrix form (e.g., by $Ax = b$, where $A$ is an nxn matrix and $b$ and $x$ are nx1 vectors). When the LSSLE is generated by a discretization (e.g., of PDEs), the dimensions of the matrix $A$ may depend on a number of discretization points used. The number of discretization points may in turn depend on a) an inherent accuracy of the numerical scheme, b) a required accuracy, and c) the convergence of the numerical process used for solving the LSSLE.

A matrix $A$ representing the LSSLE is typically sparse (e.g., having a large number of zero entries) due to the discretization of the differential operators of the PDE. For example, a central difference discretization mechanism applied to a Poisson equation, $u_{xx} + u_{yy} = f(x, y)$, may generate a matrix with only four nonzero entries per row. A PDE describing the motion estimation may be for example, $u_{xx} + u_{yy} + a*u+b*v = f(x, y)$; $v_{xx} + v_{yy} + b*u+c*v = g(x, y)$ (e.g., where u and v are the motion in x and y directions, respectively). The same discretization mechanism applied to the Motion Estimation PDE may give, for example:

$$0 = \sum_{j \in N(i)} u_j - u_i + a_i u_i + b_i v_i + c_i, \ 0 = \sum_{j \in N(i)} v_j - v_i + b_i u_i + d_i v_i + e_i$$

where *N(i)* is a spatial neighborhood of *i*. The matrix LSSLE representing this discretization may have only 6 nonzero entries per row.

Finding numerical solutions for the LSSLE includes solving linear equations, such as, *Ax = b*, where *A* is an nxn matrix and *b* and *x* are nx 1 vectors. The linear equations may be solved by various mechanisms including factorization and iterative mechanisms. However, when solving LSSLEs, factorization mechanisms typically require significantly more computational effort and time than iterative mechanisms. Thus, iterative methods are typically preferred. It may be appreciated that factorization mechanisms and/or a combination of factorization mechanisms and iterative mechanisms may also be used for solving LSSLEs according to embodiments of the invention.

Iterative mechanisms may be used to solve the linear equations *Ax = b*. The entries of the matrix *A* may be denoted by $a_{ij}$, where $1 \leq i, j \leq n$, and the entries of *x* and *b* by $x_r$ and $b_r$, respectively, with $I \leq r \leq n$. The matrix *A* may be encoded for the efficient storing thereof, for example, in Fig. 1 in main memory 104, ROM 106, and/or data storage 107, but may be stored elsewhere.

To illustrate a non-limiting example what is meant by the terms "sparse" and "large", consider a frame-rate conversion problem, defined by an LSSLE represented by a *nxn* matrix *A* where *n* is equal to 65,536. The matrix *A* may have a dimension of 65,536 x 65,536, corresponding to 4,294,967,296 single-precision (e.g., 32 bit) entries (e.g., approximately 17,000 mega bytes). Such a matrix may be considered "large". Matrix *A* may be considered "sparse" when each one of the (e.g., 65,536) rows has significantly few nonzero entries (e.g., 6 or other small numbers of nonzero entries for the motion estimation PDE). Thus, an efficiently encoded matrix A may have, for example, 327,680 nonzero entries (e.g., approximately 1.3 mega bytes). Other numbers and dimensions may be used.

Processor 109 (Fig. 1) may solve the LSSLE using an iterative mechanism, for example, starting with an initial estimate for the solution *x*, denoted $x^{(0)}$, having entries denoted by $x_r^{(0)}$. In each successive iteration *(k+l)*, a new solution estimate value $x^{(k+1)}$ may be recursively derived from the previous solution estimate value $x^{(k)}$. The iteration process may end when a convergence of estimate values is observed. For example, convergence may be observed when a measure, for example, a $L^2$ norm of $(x^{(k+1)} . x^{(k)})$, becomes smaller than some pre-determined threshold value. For example, $L^2$ norm may defined as, $|x| = \sqrt{\sum_{i=1}^{n} x_i^2}$, where n may be the length of vector x. Other measures of convergence and/or ways of ending the process may be used.

One such iterative mechanism for solving LSSLEs is the Jacobi method. In the Jacobi method a solution estimate value $x_i^{(k+1)}$ may be recursively defined, for example, by equation (1) as follows:

$$(1) \qquad x_i^{(k+1)} = \frac{1}{a_{ii}}\left( b_i - \sum_{j \neq i} a_{ij} x_j^{(k)} \right)$$

In the Jacobi method, the *nxn* matrix A may be multiplied by the *nx1* solution estimate value vector $x^{(k)}$ for generating a new nx 1 solution estimate value vector $x^{(k+1)}$. The multiplication procedure is typically repeated with each new solution estimate value vector, until a convergence of the new and old estimate values is observed. For example, convergence may occur when $L^2\_NORM (x^{(k+1)} x^{(k)}) < \varepsilon$ for some predetermined small $\varepsilon > 0$. The converging solution estimate value vector may be a solution vector to the LSSLE. Accordingly, the computational cost of solving an LSSLE using the Jacobi method may be *iterations*$*n^2(\gamma)$, where *iterations* is the number of iterations, $\gamma$ is the computational cost of multiplication and addition of the Jacobi method. Although the Jacobi method may be used to solve the LSSLE, the method typically requires a relatively large number of iterations for achieving convergence with a desired accuracy (e.g., for a substantially small $\varepsilon > 0$).

Other methods, such as the Gauss-Seidel method (GS) and a variation thereof, the successive over relaxation (SOR), were developed to solve the LSSLE, using relatively fewer iterations as compared to the Jacobi method, with the same accuracy.

The GS method partially follows the process of the Jacobi method by iteratively multiplying the *nxn* matrix *A* by the *nxl* solution estimate value vector $x^{(k)}$ until achieving a convergence of estimate values. However, the GS mechanism differs from the Jacobi method in how the solution estimate value vector is defined. The GS mechanism recursively defines the solution estimate value vector $x^{(k)}$ using the most recently computed entries or coordinate values of the vector. For example: $x_i^{(k+1)}$ may be defined in terms of $x_j^{(k+1)}$ for *j=1, 2, ... (i-1)* and $x_j^{(k)}$ for *j=i, i+1, ..., n*. Typically this relationship improves the convergence rate as compared to the Jacobi and other similar method. The GS method recursively defines the estimate value $x_i^{(k+1)}$, for example, by equation (2) as follows:

$$(2) \qquad x_i^{(k+1)} = \frac{1}{a_{ii}} \left( b_i - \sum_{j<i} a_{ij} x_j^{(k+1)} - \sum_{j>i} a_{ij} x_j^{(k)} \right)$$

Since the matrix $A$ is sparse havind mostly zero $a_{ij}$ values, each of the summations $\sum_{j<i} a_{ij} x_j^{(k+1)}$ and

$\sum_{j>i} a_{ij} x_j^{(k)}$ typically involves only a few terms.

Although, as compared with the Jacobi method, the GS and SOR methods typically speed up the convergence of the estimate solution value, the GS and SOR methods may cause other problems. For example, the GS and SOR methods may update the current solution estimate value using the most recently computed entries of $x$, and may therefore be termed "serial". For example, in equation (2), $x_i^{(k+1)}$ depends on values of x calculated in same iteration (e.g., in the summation term for $j<i$). Thus, the value of $x_i^{(k+1)}$ depends on its "neighboring entry/entries" (e.g., $x_{i-1}^{(k+1)}$) in the vector $x$, which are calculated during the same (e.g., $k+1$) iteration. Such dependencies in the GS method make parallel calculations of elements of the vector $x$ impossible, significantly limiting the speed of solving the LSSLE. For example, to generate an entry (e.g., $x_i^{(k+1)}$ in the vector $x$, an application typically waits until, after, or upon the completion of generating a previous or neighboring term (e.g., $x_{i-1}^{(k+1)}$) in the vector x. For example, the GS method may not be concurrently applied to sequential terms (e.g., $x_i$ and $x_{i+1}$) of x.

Embodiments of the invention may include iteratively or recursively defining each ordered coordinate element or entry $x_i^{(k)}$ of x by other entries of the same vector (e.g., computed in the current iteration, $k$), in an order different from the order in which the coordinate element is arranged in the vector. The other entries may be "non-neighboring" entries $x_i^{(k)}$ in the vector ordering. Thus, value of each entry $x_i^{(k)}$ in $x$ may be updated in an order different from the order in which the coordinate element is arranged in the vector. According to the GS mechanism (e.g., defined in equation (2)) the entry $x_i^{(k)}$ is independent of the other non-neighboring entries. Accordingly, the entry $x_i^{(k)}$ and its other non-neighboring entries are concurrently updated in parallel. Thus, according to embodiments of the invention, updating an entry (e.g., using the GS mechanism) does not require waiting for the update of sequentially ordered or neighboring entries in the vector.

Embodiments of the invention provide a mechanism for rearranging the ordering of entries of the vector $x$ to generate a new vector $x'$, such that for each entry of $x$, the initially neighboring entries thereof in the original ordering are moved to different non-neighboring locations in the new ordering. Thus, the originally sequential entries (e.g., $x_i$ and $x_{i+1}$ of vector $x$) are separated (e.g., currently in non-neighboring positions) in the vector $x'$. Since, in the GS mechanism (e.g., according to equation (2)), solving each coordinate entry of a vector depends on its neighboring entries, by moving the originally neighboring entries to non-neighboring positions, the entries in new vector $x'$ no longer depend on the current neighbors. Thus, each of two or more neighboring entries of the new vector, for example, an entry (e.g., $x_i'^{(k+1)}$) and a new neighboring term (e.g., $x_{i-1}'^{(k+1)}$) of the vector $x'$ may be solved at the same time or in parallel, by updating the recursive definitions thereof using the respective moved non-neighboring entries thereof by which they are recursively defined.

For example, a conventional GS method (e.g., according to equation (2)) may be applied to an entry (e.g., $x_4$) in the vector $x$. The result typically depends on the most recently computed entries of $x$ (e.g., $x_3$), and thus must wait for the processing of the preceding neighboring term. The rearrangement algorithm may be used to separate the initially neighboring entries (e.g., $x_3$, $x_4$, $x_5$). In one embodiment, the entries (e.g., $x_3$ and $x_4$) that initially neighbor entry (e.g., $x_4$) in $x$ are rearranged to be non-neighboring entries in $x'$. The entry (e.g., $x_4$) in the new vector $x'$ may have new neighboring values (e.g., $x_1$ and $x_8$ in the sequence $x_1, x_4, x_8$ of rearranged vector $x'$) from which the entry (e.g., $x_4$) does not depend (e.g., according to equation (2)). Thus, the GS mechanism (e.g., defined by equation (2)) may be concurrently applied to the new neighboring entries (e.g., $x_1, x_4, x_8$) in $x'$. Each rearranged neighboring entries (e.g., $x_1$, $x_4, x_8$) in $x'$ may be solved (e.g., according to equation (2)) depending on the most recently computed entries of $x'$ (e.g., $x_0, x_3, x_7$, respectively). Since the rearrangement of entries, these most recently computed entries of $x'$ (e.g., $x_0, x_3, x_7$) no longer neighbor the entries (e.g., $x_1, x_4, x_8$, respectively) dependent thereon. Thus, to solve each of neighboring

entries (e.g., $x_1$, $x_4$, $x_8$) the solution mechanism need not wait for the solution of other neighboring entries.

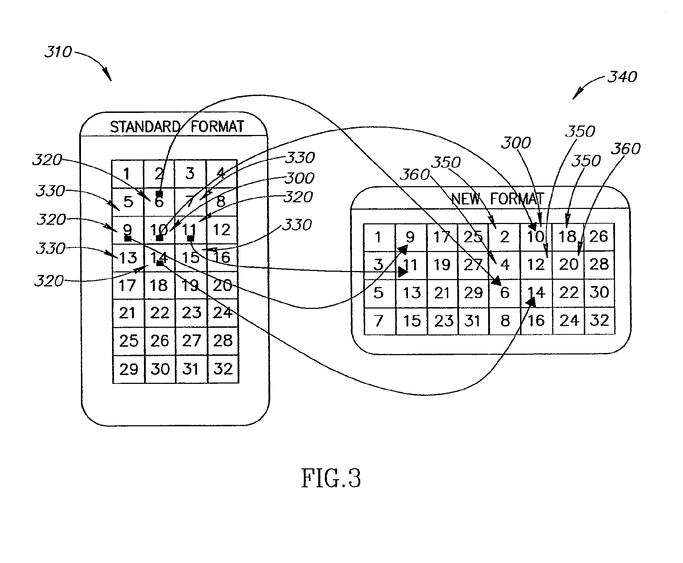

In one embodiment (e.g., shown in Fig. 3), the vector $x$ is transformed into a corresponding first grid or matrix (e.g., matrix 310 of Fig. 3), which may be termed a mapping matrix. The elements of the first grid or matrix are rearranged into a second grid or matrix (e.g., matrix 340 of Fig. 3) corresponding to the new vector $x'$. The rearrangement may be executed such that for each entry of the first grid or matrix the initially neighboring entries thereof in the original ordering are moved to different non-neighboring locations.

In one embodiment, the order of the processing of vector elements may be different in a manner corresponding to a mapping of the vector to a mapping matrix, and the rearranging of the mapping matrix to a rearranged mapping matrix, where neighboring elements of the mapping matrix are non-neighboring in the rearranged mapping matrix.

For a vector $x$ having elements in a first order and a vector $x'$ having elements in a second order, it may be appreciated by those skilled in the art that operating on consecutive elements of the vector $x'$ may be equivalent to operating on elements of the vector $x$ according to the second order. The vector $x$ may be reordered without the use of or reference to neighboring elements. For example, rearranging entries may be equivalent to defining a non-trivial map or reference to entries. For example, operating on or computing vector entries in a non-consecutive or alternate order may be equivalent to rearranging. For example, the entries need not be moved or rearranged themselves. Thus, in some embodiments, the elements of the vector may be operated on out-of-order from the vector ordering, in an order other than the order in which the elements appear in the vector. Groups of elements may be operated on at the same time.

Reference is made to Fig. 3, which schematically illustrates the rearrangement of entries from a vector $x$ having an initial ordering to vector $x'$ having a new ordering. A data structure or matrix 310 may represent a vector $x$ having an initial ordering. For example, the entries of the vector $x$ may fill the coordinates of the matrix 310, row by row (as shown), column by column, or using other orderings. An entry 300 (e.g., $x_{10}$ or the 10th entry of the vector $x$) in matrix 310 may have eight neighboring entries, for example, including four facing entries 320 (e.g., adjacent and in either the same row OR column as the entry 300) and four diagonal entries 330 (e.g., adjacent but in a different row AND column as entry 300). Alternatively, entries other than facing and diagonal entries 320 and 330 may be considered "neighboring".

A data structure or matrix 340 may represent or correspond to a vector $x'$ having a rearranged ordering. According to the rearranged ordering, the entry 300 in the matrix 340 (e.g., corresponding to the 10th entry in the matrix 310) may be separated from the initially neighboring entries. For example, the entries (e.g., 6th, 9th, 11th, and 14th and/or the 5th, 7th, 13th, and 15th) in the initial ordering of the matrix 310, may be non-not neighboring the entry 300 in the new ordering of the matrix 340. The neighboring entries of the initial ordering may be moved or spaced a distance (e.g., defined by the parameter S, described herein in reference to the rearrangement equation (3)) from the entry 300 in the rearranged ordering. The entry 300 in matrix 340 may have new neighboring entries, for example, facing entries 350 and diagonal entries 360 different from the facing entries 320 and/or the diagonal entries 330.

For example, once the vector has been rearranged in matrix 340 so that each entry 300 is separated from the initially neighboring entries thereof (e.g., facing entries 320 and/or diagonal entries 330), the GS mechanism may be applied, in parallel, to the newly neighboring entries of the rearranged vector $x'$ (e.g., facing entries 350 and/or diagonal entries 360). For example, for solving the LSSLE of equations $Ax'=b$, the $n x n$ matrix $A$ may be multiplied by the rearranged $n x l$ vector $x'$ (e.g., or to the $n x m$ matrix 340 representing vector $x'$). Thus, the computational steps of solving the LSSLE may be similar to the steps of the Jacobi method (e.g., concurrently processing multiple entries of a vector by matrix multiplication), while the convergence rate of the solutions is similar to that associated with the GS method (e.g., solution values based on the most recent calculations). Thus, the benefits of each of the Jacobi and GS method may be realized. Other vectors, matrices, or types of data structures may be used. Other reordering schemes may be used.

It may be appreciated that each entry may have other numbers or definitions of neighboring entries. For example, entries arranged along the diagonal corners of matrices 310 and 340 may have 2 facing entries 320 and 1 diagonal entry 330. Entries arranged along the edges (and not the corners) of matrices 310 and 340 may have 3 facing entries 320 and 2 diagonal entries 330. In another embodiment, matrix representations of vectors need not be used. Instead, the initial and rearranged vectors $x$ and $x'$ themselves may be used and matrices 310 and 340 may be considered one dimensional (e.g., equivalent to the vectors $x$ and $x'$ themselves). In this example, for a $l x n$ vector, entries at the edge of the vector (e.g., $x_0$ and $x_{n-1}$) may have 1 neighboring entry and all other entries (e.g., $x_1$ and $x_{n-2}$) may have 2 neighboring entries.

It may be appreciated that although rearranging or moving an entry is described, embodiments of the invention include rearranging or moving a derivative of the entry. For example, a matrix representing a rearranged vector may be put in reduced row echelon form, normalized, reduced or split into upper triangular, lower triangular, diagonal, and/or other altered. The rearranged or moved entry may be a term derived from of the initial entry (e.g., not a replicate).

The movement of entries in a vector from an initial ordering to a rearranged ordering may be indicated in Fig. 3 by arrows. It may be noted that this movement is a mathematical abstraction and may be defined by a mapping, algorithm, or equation (e.g., the rearrangement equation (3) described herein). In another embodiment, rearranging entries may be equivalent to defining an alternate mapping or reference to entries. For example, the entries need not be moved or rearranged themselves. For example, deciding in which or what order to operate on or compute vector entries may be equivalent to rearranging.

The order in which the elements are operated on may be determined by processor 109 (Fig. 1), executed by execution unit 130 (Fig. 1), and/or stored as a command or a set of instructions (e.g., in cache hierarchy 160, main memory 104, ROM 106, a data storage device, or a combination thereof of Fig. 1). Alternately, the reordering of elements of the vector, or the ordering in which the elements are processed may be inherent in a set of instructions stored and retrieved for execution. For example, a process may be pre-set to operate on certain entries (e.g. groups of entries) first, then others second, etc., where the order does not correspond to the order in which the elements are arranged in the vector. For example, a first set of a plurality (e.g., for or eight) of mutually non-consecutive entries may be packed into a first instruction, then a second set of a plurality (e.g., for or eight) of mutually non-consecutive entries may be packed into a second instruction, etc.

An algorithm may be applied to the vector $x$ for rearranging the entries thereof to form a new vector $x'$. For example, one such algorithm may proceed as follows (e.g., demonstrated on the SSE variant). The vector x may be stored as a matrix 310 with R rows and C columns. A rearrangement equation for rearranging the vector $x$ of size R*C into a new or rearranged vector $x'$ having entries $x'(j)$, where $0 \le j \le R * C\text{-}1$, may be for example:

$$(3) \qquad x'(j) = x(C\left( MOD(i,S)\left\lceil \frac{R}{S} \right\rceil + \left\lfloor \frac{j}{SC} \right\rfloor \right) + MOD\left( \left\lfloor \frac{j}{S} \right\rfloor, C \right)$$

The parameter S may be a distance (e.g., in $x'$) between entries $x(j)$ and $x(j+1)$ of the initial vector $x$. The choice of parameter S may affect the processor 109 (Fig. 1) (e.g., SIMD) pipeline efficiency and throughput and may be chosen for optimizing these features. For example, the parameter value of S may be 8. For example, for a sufficiently large matrix 310, a parameter S value of 4 may be sufficient for filling the system 100 (Fig. 1) pipeline for full throughput. Other values may be used.

It may be appreciated by those skilled in the art that matrix representations of vectors need not be used. Instead, the vector themselves may be used.

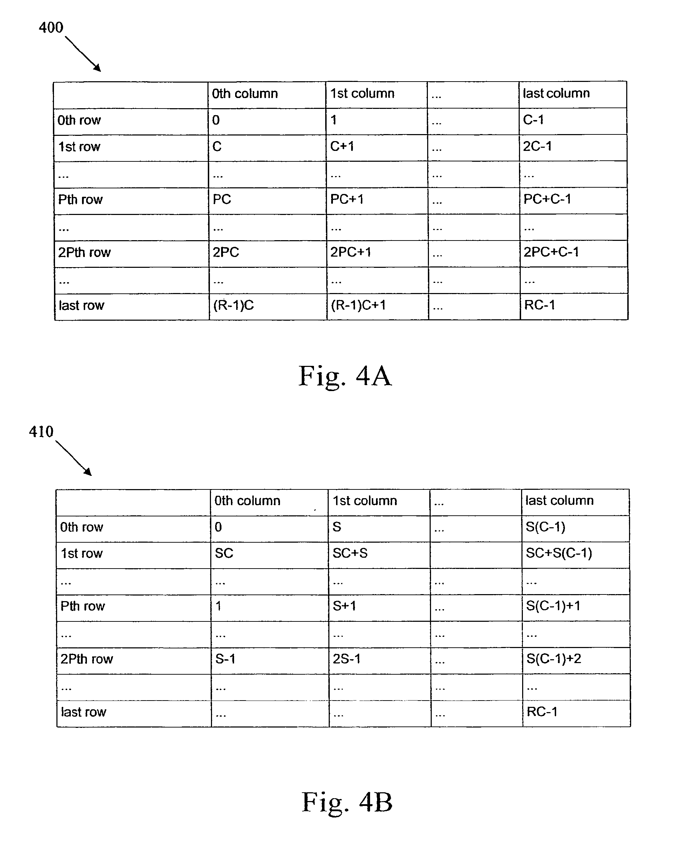

Reference is made to Figs. 4A and 4B, which show a matrix 400 representing the vector $x$ having an initial order and a matrix 410 representing the vector $x'$ having a new order, respectively. This rearrangement of entries may be executed according to the rearrangement equation described herein. In this example, the parameter S is 3.

By rearranging the entries in a new vector $x'$, each entry may have neighboring entries that are independent thereof and thus, may be processed in parallel therewith. In one embodiment, for an entry $x_i$, the number of entries that were initially neighboring $x_i$ in the vector $x$ and are non-neighboring $x_i$ in the rearranged vector $x'$ is the number of entries that may be processed in parallel with the entry $x_i$ (e.g., using the GS mechanism).

In one embodiment, parallel processing algorithms and/or hardware may be used for processing neighboring entries in parallel. For example, the processor 109 (Fig. 1) may process two or more neighboring entries of rearranged vector $x'$ in parallel, for example, using SIMD operations.

A parallel processing algorithm may be used for solving an LSSLE defined by $Ax=b$, by multiplying the $nxn$ matrix $A$ by the rearranged $nxl$ vector $x'$. For example, one embodiment may use a SSE instruction set 140 (Fig. 1) for executing 4 data points in parallel and another embodiment may use an AVX instruction set 140 (Fig. 1) for executing 8 data points in parallel. Other suitable packed, SIMD, or parallel processing instruction sets or methods may be used. For example, an instruction set 140 (Fig. 1) for executing 16 data points in parallel may be used. The vector $x'$ in one embodiment may be rearranged such that for each entry, at least four initially neighboring entries of $x$ are non-neighboring in $x'$ for executing four independent data points in parallel. The vector $x'$ in another embodiment may be rearranged such that for each entry, at least eight initially neighboring entries of $x$ are non-neighboring in $x'$ for executing 8 independent data points in parallel.

Embodiments are described herein using pseudo-code. Other programming code, steps, ordering or steps, programming languages, types of instruction sets, and/or minimum numbers of non-neighboring entries may be used.

The following pseudo-code describes the embodiment using SSE instructions for processing each of multiple (e.g., 4) data points for the rearranged vector $x'$ by using multiple (e.g., 4) neighboring values (e.g., 4X4=16 entries held in xmm1-xmm4), in parallel. The vector $x'$ may have an order in which the multiple (e.g., 4) neighboring values of each entry (e.g., the data points held in xmm1-xmm4) are independent of each other. The "kernel", KERNEL-SSE, may describe processing the multiple (e.g., 4) independent entries of the vector $x'$ in parallel. This kernel may be called n/4 times in order to execute the "matrix by vector" multiplication, for example, according to the equation $Ax'=b$. Coefficient terms of matrix $A$ corresponding to the data points (e.g., 4X4=16 entries held in xmm5-xmm8) may be used. This kernel may be used for solving the Poisson equation (e.g., where each row of the matrix may have four nonzero entries). In other embodiments, other than 4 entries may be processed in parallel.

The pseudo-code may proceed for example as follows:

KERNEL-SSE

ERR_XMM may hold the $L^2$ norm $((x^{(k+1)} - x^{(k)})^2)$ which may indicate the convergence of x. ERR_XMM may be initially set to 0, and the value thereof may be updated, for example, when KERNEL is invoked. xmm0 may hold 4 entries of b vector (e.g., where Ax=b). xmm1-xmm4 may hold 4x4=16 entries of the current value of the estimated solution vector x. These values may be the neighbors of estimated value of x, for example, calculated by PDE discretization.

xmm5-xmm8 may hold 4x4=16 entries of the matrix A (e.g., the coefficient values of A). xmm9 may hold 4 entries of the newly computed approximation for x at output. ERR_XMM may be updated. Notation: For each $j$ = 0,1,2,... xmmj may hold a plurality (e.g., 4 or 16) of entries. These 4 entries of xmmj may be distinguished by the following notation: xmmj[3], xmmj[2], xmmj[1], xmmj[0]. The KERNEL may compute the following:

xmm10 = xmm9

xmm9 = xmm1*xmm5+xmm2*xmm6+xmm3*xmm7+xmm4*xmm8+xmm0
ERR_XMM = (xmm 10[3]-xmm9[3]) $^2$+ (xmm 10[2]-xmm9[2]) $^2$+ (xmm10[1]-xmm9[1]) $^2$+ (xmm10[0]-xmm9[0])$^2$

Pseudo-code SSE:

```
1. Load xmm1, xmm2, xmm3, xmm4 // load values of "neighbors" of x
2. Load xmm5, xmm6, xmm7, xmm8 // load matrix coefficients
3. Load xmm0 // load b values
4. Load xmm9 // load current value of x
5. MOVPS xmm10, xmm9 // store old value of x
6. MULPS xmm1, xmm5 // packed multiplications
7. MULPS xmm2, xmm6 // packed multiplications
8. MULPS xmm3, xmm7 // packed multiplications
9. MULPS xmm4, xmm8 // packed multiplications
10. ADDPS xmm1, xmm2 // packed addition
11. ADDPS xmm3, xmm4 // packed addition
12. ADDPS xmm1, xmm3 // packed addition
13. ADDPS xmm1, xmm0 // packed addition
14. SUBPS xmm10, xmm9 // L2 norm calculation (subtraction)
15. MULPS xmm10, xmm10 // L2 norm calculation (squaring)
16. ADDPS ERR_XMM, xmm10 // L2 norm calculation (updating xmm9)
17. Store xmm1
```

These instructions are of course provided as an example only. Other specific instances of instructions may be used with embodiments of the invention. After KERNEL-SSE is invoked n/4 times, all of the entries of the vector $x'$ have been computed for the current iteration and ERR_XMM holds the $L^2$ norm of the difference from the previous iteration. If the $L^2$ norm value is smaller than a pre-computed value or threshold, the process may be stopped. The value of $x'$ computed in the most recent iteration may be used as the final result. Alternatively, the value of $x$ corresponding to the most recent iteration value of $x'$ (e.g., determined by "un-rearranging" or inverse mapping of $x'$ to $x$ by applying an inverted rearrangement equation) may be used as the final result.

The vector reordering may be used in a system in which equations are solved using other steps, processes and/or mechanisms.

The computational costs for each iteration or KERNEL-SSE of one embodiment may be summarized for example as follows: 10 loads, 1 store, 5 MULPS, and 6 ADDPS.

A similar kernel may be used for solving the motion estimation equation, but typically requires processing 8 entries of the vector in parallel (e.g., to find solutions sufficiently fast for generating "smooth quality video"). The computational costs for executing the corresponding motion estimation kernel (e.g., for same number of entries in the vector) may be summarized for example as follows: 11 loads, 1 store, 6 MULPS, and 7 ADDPS.

The following pseudo-code describes an embodiment using (e.g., AVX) instructions for processing each of multiple (e.g., 8) data points for the rearranged vector $x'$ by using multiple (e.g., 8) neighboring values (e.g., 8X8=64 entries held in ymm1-ymm4), in parallel. The vector $x'$ may have an order in which the multiple (e.g., 8) neighboring values of each entry (e.g., the data points held in ymm1-ymm4) are independent of each other. The "kernel", KERNEL-AVX, may describe processing the multiple (e.g., 8) independent entries of the vector *x'* in parallel. This kernel may be called n=8 times in order to execute the "matrix by vector" multiplication, for example, according to the equation *Ax'=b*. Coefficient terms of matrix A corresponding to the data points (e.g., 8X8=64 entries held in ymm5-ymm8) may be used.

The pseudo-code may proceed for example as follows:

KERNEL-AVX

ERR_XMM may hold the $L^2$ norm $((x^{(k+1)} - x^{(k)})^2)$, which may indicate the convergence of x. ERR_XMM may be initially set to 0, and the value thereof may be updated, for example, when KERNEL is invoked. ymm0 may hold 8 entries of the b vector (e.g., where Ax=b). ymm1-ymm4 may hold 8x8=64 entries of the current value of the estimated solution vector x. These values may be the neighbors of estimated value of x, for example, calculated by PDE discretization.

ymm5-ymm8 may hold 8x8=64 entries of the matrix A (e.g., the coefficient values).

ymm9 may hold 8 entries of the value of the solution x at the input. ERR_YMM may be updated.

Notation: For each *j* = 0,1,2,..., ymmj may hold a plurality (e.g., 8 or 64) of entries. The 8 entries of ymmj may be distinguished by the following notation: ymmj[7], ymmj[6], ymmj[5], ymmj[4], ymmj[3], ymmj[2], ymmj[1], ymmj[0]. The KERNEL may compute the following:

ymm10 = ymm9
ymm9 = ymm1*ymm5+ymm2*ymm6+ymm3*ymm7+ymm4*ymm8+ymm0

ERR_YMM = $(ymm10[7]-ymm9[7])^2$ + $(ymm10[6]-ymm9[6])^2$ + $(ymm10[5]-ymm9[5])^2$+ $(ymm10[4]-ymm9[4])^2$+$(ymm10[3]-ymm9[3])^2$+ $(ymm10[2]-ymm9[2])^2$+ $(ymm10[1]-ymm9[1])^2$+ $(ymm10[0]-ymm9[0])^2$;

Pseudo-code for the instruction set for processing 8 data points in parallel:

1. Load ymm1-ymm4 // load current value of x neighbors
2. Load ymm5-ymm8 // load matrix coefficients
3. Load ymm0 // Load b values
4. Load ymm9 // load current value of x
5. ymm10 = ymm9
6. MULPS ymm1, ymm1, ymm5 // packed multiplications
7. MULPS ymm2, ymm2, ymm6 // packed multiplications
8. MULPS ymm3, ymm3, ymm7 // packed multiplications
9. MULPS ymm4, ymm4, ymm8 // packed multiplications
10. ADDPS ymm1, ymm1, ymm2 // packed addition
11. ADDPS ymm3, ymm3, ymm4 // packed addition
12. ADDPS ymm1, ymm1, ymm0 // packed addition
13. ADDPS ymm1, ymm1, ymm3 // packed addition
14. SUBPS ymm10, ymm10, ymm9 // $L^2$ norm calculation (subtraction)
15. MULPS ymm10, ymm10, ymm10 // $L^2$ norm calculation (squaring)
16. ADDPS ERR_YMM, ERR_YMM, ymm10 // $L^2$ norm calculation (update ymm10)
17. Store ymm9

After KERNEL-AVX is invoked n/8 times, all of the entries of the vector *x'* may be computed for the current iteration and xmm9 may hold the $L^2$ norm of the difference from the previous iteration. If the $L^2$ norm value is smaller than a pre-computed value or threshold, the process may be stopped and the value of *x'* (e.g., or the value of *x* corresponding thereto) computed in the most recent iteration may be used as the final result.

The computational costs for each iteration or KERNEL-AVX of one embodiment may be summarized for example as follows: 10 loads, 1 store, 5 MULPS, and 6 ADDPS.

By using the instruction set 140 (Fig. 1) for processing 8 data points in parallel instead of the SSE instruction set 140 (Fig. 1) (e.g., processing 4 data points in parallel), processor 109 (Fig. 1) may process approximately twice as much data using the same number of instructions (e.g., and latency).

Embodiments of the invention may be used for solving LSSLEs for estimating motion for converting frame rates. For example, consider a video player or computer that plays or outputs a video file at an initial rate (e.g., 24 frames per second (fps)) on a monitor or screen with a refresh rate (e.g., 60 fps). For converting the file to play at the refresh rate, such that within the same elapsed time period the device outputs at a first rate and the screen outputs at a second rate, a frame conversion application (e.g., motion estimator) may generate additional fps (e.g., 48 fps). E.g., for each one-second time period 24 frames enter a process according to an embodiment of the invention and 60 frames exit. For example, less than 60 additional fps may be generated since some of the new frames are copies of the old frames. For example, if each frame has $n^2$ pixels where n=256, the application may generate solutions to, on average, 48 LSSLEs per second. In one embodiment, the LSSLEs may be arranged as a matrix form (e.g., $Ax = b$).

In conventional GS mechanisms each solution for the LSSLEs may be generated by multiplying the matrix A by each entry in vector $x$ one entry at a time or in turn. Embodiments of the invention may generate each solution for the LSSLEs by multiplying the matrix A by two or more (e.g., independent) entries of vector x' in parallel or concurrently.

Solutions for each the LSSLEs may be generated until convergence for the solution (e.g., $x$ or $x'$) is achieved. For example, if convergence is achieved within 10 iterations of the GS mechanism, the application may perform 10 "matrix by vector" multiplications, which requires $10*6n^2 = 3932160$ multiplications and $10*4n^2 = 2621440$ additions per second (e.g., if the matrix A has 6 nonzero entries and there are $n^2=256^2$ pixels in each frame). The frame conversion application may have additional computational costs of, for example, preparing the matrices A (e.g., dividing each matrix by the diagonal elements thereof). According to embodiments of the invention, by solving multiple (e.g., 4 or 8) data point in parallel, solutions to LSSLE may be generated faster than with a conventional mechanism. A player operating according to embodiments of the invention may playback a more "smooth" video than conventional methods, although other or different benefits may be achieved.

Embodiments of the invention may be advantageous over other conventional mechanisms for solving LSSLEs, such as the "red-black" GS method, the "zig-zag scanning" method, and the "zebra line relaxation" method, as are known in the art. For example, the red-black method typically uses 2-3 times more iterations than the standard GS method. In addition, the red-black method typically executes a packing and/or unpacking process before and/or after each iteration and thus, cannot be easily integrated into an optical flow, or a multi-grid framework. For example, the zig-zag scanning method, like the red-black method, typically executes a packing and/or unpacking process before and/or after each iteration and thus, may involve significant overhead and may be cumbersome to implement. The zig-zag scanning method is typically not suited for a multi-scale framework. For example, the zebra line relaxation method, like the red-black method, typically uses 2-3 times more iterations than the GS method.

In contrast, embodiments of the invention may use the same number of iterations as the GS method and thus, half the number of iterations as the aforementioned conventional methods. Embodiments of the invention need not implement a packing and/or unpacking process, for example, before and/or after each iteration. Thus, embodiments of the invention may be easily integrated into an optical flow, or a multi-grid or multi-scale framework. Embodiments of the invention may use significantly less pre-processing and/or post-processing effort or cost (e.g., as compared to the zig-zag scanning method). For example, embodiments of the invention may use a single pre-processing step for a multi-scale and/or a multi-grid framework. Embodiments of the invention using an instruction set for processing 4 or 8 data points in parallel may provide solutions to equations, for example, 3.5 and 7 times faster, respectively, than a standard GS mechanism.

Other or different benefits or advantages may be achieved.

Although Jacobi and GS mechanisms are described herein, embodiments of the invention may be used with any iterative mechanism. An iterative mechanism is a mechanism that solves a problem (e.g., an equation or system of equations) by finding successive approximations to the solution starting from an initial guess and/or estimation. For example, Newton's method, fixed point method, stationary iterative methods, such as the Jacobi and GS mechanisms described herein or variations thereof, Krylov subspace methods, such as, the conjugate gradient method (CG), the generalized minimal residual method (GMRES), and the biconjugate gradient method (BiCG). Other mechanisms may be used.

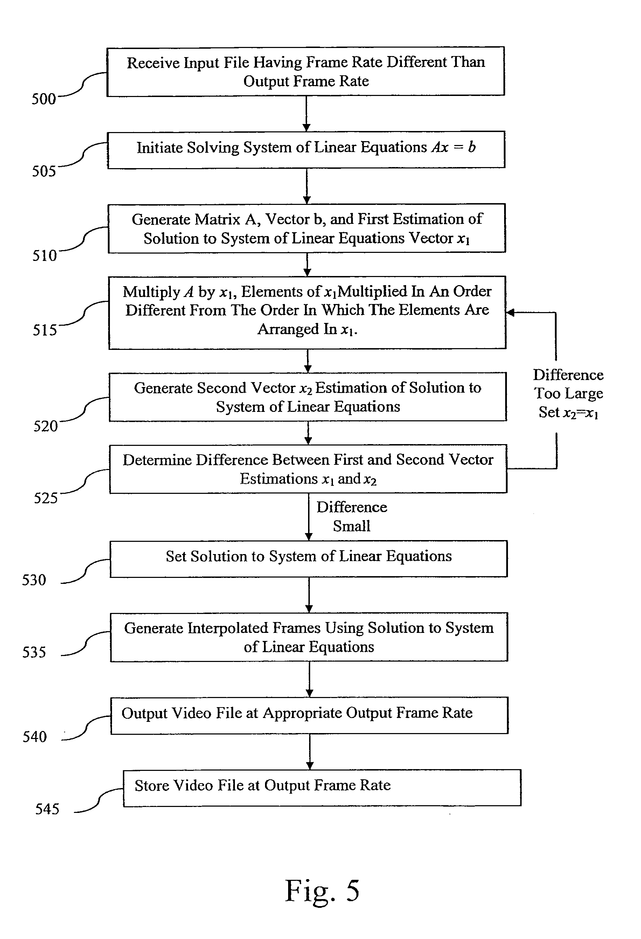

Reference is made to Fig. 5, which is a flow chart of a method according to an embodiment of the invention. Embodiments of the method may be used by, or may be implemented by, for example, computing system 100 of Fig. 1 or other suitable systems.

In operation 500, a system (e.g., system 100 of Fig. 1) may receive a video input file having a frame rate from an input device (e.g., input device 122 of Fig. 1) that is different than the frame rate for outputting video files to an output device (e.g., display device 121 of Fig. 1).

In operation 505, an execution unit (e.g., execution unit 130 of Fig. 1) may initiate solving a system of linear equations (e.g., an LSSLE) defined by equations $Ax = b$. The system of linear equations may define intermediary frames for converting the video file from the input frame rate to the output frame rate.

In operation 510, a processor (e.g., processor 109 of Fig. 1) may generate a matrix $A$ representing the coefficients of the system of linear equations, a vector $x$ representing an first estimation of a solution to the system of linear equations, and a vector b representing the scalar values of the system of linear equations. The vector $x$ may include a plurality of elements arranged in an order (e.g., $x_1, x_2, x_3, x_4, ...$).

In operation 515, the processor may multiply the matrix $A$ by the vector $x$ such that the elements of the vector x may be multiplied in an order (e.g., $x_1, x_9, x_{17}, x_{25}, ...$) different from the order in which the elements are arranged in the vector. The successive entries for being multiplied are independent or separated from neighboring elements. For example, $x_1$ does is independent of $x_9$, $x_{17}$, and $x_{25}$ according to the GS method. Thus, the plurality of independent elements of the vector may be multiplied in parallel. In one embodiment, the processor may multiply a plurality of consecutive elements in parallel using SIMD instructions.

In one embodiment, the processor may actually rearrange the order in which the elements are arranged in the vector to generate the different order (e.g., $x_1$, $x_9$, $x_{17}$, $x_{25}$, ...). In one embodiment, the elements of the vector may be rearranged in a matrix form (e.g., from matrix 310 to matrix 340, of Fig. 3). In another embodiment the processor may simply calculate vector elements out-of-order.

In operation 520, the processor may generate a second vector estimation of the solution to a system of linear equations, wherein the second vector estimation is a product of the multiplying in operation 515.

In operation 525, the processor may determine or measure the difference between first and second vector estimations. When the first and second vector estimations differ by less than a predetermined amount, a process may proceed to operation 530. Otherwise the process may proceed to operation 515, replacing the first vector estimation with the second vector estimation.

In operation 530, the processor may set the solution to the LSSLE. The solution to the system of linear equations may be set to be the second vector estimation. Alternatively, the solution to the system of linear equations may be set to be the first vector estimation. Alternatively, the solution to the system of linear equations may be set to be an average of the first and second vector estimations.

In operation 535, the processor may generate an interpolated frame using the solutions to the LSSLE for converting at least a segment of the video file from the input frame rate to the output frame rate. In one embodiment, each interpolated frame between each pair of known frames may be described by a separate LSSLE. In other embodiments, multiple interpolated frames may be described by the same LSSLE. A process may repeat operations 505-535 until each interpolated frame has been generated using the LSSLE representative thereof. Once each of the interpolated frames are generated for converting at least a segment of the video file from the input frame rate to the output frame rate, a process may proceed to operation 540.

In operation 540, an output device (e.g., display device 121 of Fig. 1, such as, a monitor) may output the video file at the appropriate output frame rate thereof.

In operation 545, a memory unit (e.g., main memory 104, ROM 106, data storage 107, such as a DRAM, of Fig. 1) may store the video file at the output frame rate. The memory unit may store the results of multiplying the matrix $A$ by the vector x (e.g., in operation 515).

Other operations or series of operations may be used.

Embodiments of the invention may include an article such as a computer or processor readable medium, or a computer or processor storage medium, such as for example a memory, a disk drive, or a USB flash memory, encoding, including or storing instructions which when executed by a processor or controller, carry out methods disclosed herein.

Embodiments are described using equation solution methods for the purpose of video interpretation. However, other embodiments may employ such solution methods in other context, such electrical engineering, fluid dynamics, other computer vision/graphics systems, such as optical flow estimation, super-resolution, and image-noise reduction.

While the invention has been described with respect to a limited number of embodiments, it will be appreciated that many variations, modifications and other applications of the invention may be made. Embodiments of the present invention may include other apparatuses for performing the operations herein. Such apparatuses may integrate the elements discussed, or may include alternative components to carry out the same purpose. It will be appreciated by persons skilled in the art that the appended claims are intended to cover all such modifications and changes as fall within the true spirit of the invention.

**Claims**

1. A method comprising:

   multiplying a matrix by a vector, wherein the matrix is a representation of a large and sparse system of linear equations used to estimate motion between frames of a video file for converting frame rates and the vector is a first estimation of a solution to the system of linear equations, wherein the vector comprises a plurality of elements arranged in an order and wherein the matrix is multiplied by elements of the vector in an order different from the order in which the elements are arranged in the vector, and wherein a plurality of elements in the vector are multiplied in parallel;
   generating a second vector estimation of the solution to the system of linear equations, wherein the second vector estimation is a product of the multiplying; and
   when the first and second vector estimations differ by less than a predetermined amount setting the solution to the system of linear equations.

2. The method of Claim 1, wherein the plurality of elements are multiplied by a processor using a single instruction multiple data instruction set.

3. The method of Claim 1, comprising rearranging the ordered elements of the vector to generate the order different from the order in which the elements are arranged.

4. The method of Claim 1, comprising, while converting a video file from an input frame rate to an output frame rate, generating interpolated image frames using the solution to the system of linear equations.

5. The method of Claim 4, comprising displaying the video file on a display at the output frame rate of the display.

6. The method of Claim 1, wherein the order different from the order in which the elements are arranged in the vector corresponds to a mapping of the vector to a mapping matrix, and the rearranging of the mapping matrix to a rearranged mapping matrix, where neighboring elements of the mapping matrix are non-neighboring in the rearranged mapping matrix.

7. A method comprising:

    rearranging entries in an initial vector having an initial ordering to generate a new vector having a new ordering, wherein each entry in the initial vector is rearranged such that a neighboring entry in the initial vector in the initial ordering is moved to a different non-neighboring location in the new ordering; and
    solving each of two or more neighboring entries of the new vector in parallel by updating recursive definitions thereof using the respective moved non-neighboring entries thereof by which they are recursively defined.

8. The method of Claim 7, comprising iteratively solving the vector by rearranging the vector and solving the vector, wherein each iteration provides a successive approximation for a solution to a set of linear equations.

9. The method of Claim 7, wherein the vector solutions define interpolated frames for converting a video file from an input frame rate to an output frame rate.

10. The method of Claim 9, comprising displaying the video file on a display at the output frame rate of the display.

11. A system comprising:

    an execution unit to execute a process to multiply a matrix by a vector, wherein the matrix is a representation of a large and sparse system of linear equations used to estimate motion between frames of a video file for converting frame rates and the vector is a first estimation of a solution to the system of linear equations, wherein the vector comprises a plurality of elements arranged in an order and wherein the matrix is multiplied by elements of the vector in an order different from the order in which the elements are arranged in the vector, and wherein a plurality of elements in the vector are multiplied in parallel and to generate a second vector estimation of the solution to a system of linear equations, wherein the second vector estimation is a product of the multiplying, and when the first and second vector estimations differ by less than a predetermined amount to set the solution to the system of linear equations; and
    a dynamic random access memory.

12. The system of Claim 11, wherein the execution unit is to use a single instruction multiple data instruction set to execute a process to multiply the plurality of elements in parallel.

13. The system of Claim 11, wherein the processor is to rearrange the ordered elements of the vector to generate the order different from the order in which the elements are arranged.

14. The system of Claim 11, wherein the processor is to, while converting a video file from an input frame rate to an output frame rate, generate interpolated image frames using the solution to the system of linear equations.

15. The system of Claim 14, comprising a display to display the video file at the output frame rate of the display.

Fig. 1

200

| PREFETCH<br>210 |  |
| --- | --- |
| FETCH<br>212 |  |
| DECODING AND PAIRING<br>214 |  |
| ADDRESS<br>GENERATION<br>216 | ADDRESS<br>GENERATION<br>216 |
| EXECUTE<br>218 | EXECUTE<br>218 |
| WRITE BACK<br>220 | WRITE BACK<br>220 |

U PIPE

V PIPE

202

204

# Fig. 2

FIG.3

400

|  | 0th column | 1st column | ... | last column |
|---|---|---|---|---|
| 0th row | 0 | 1 | ... | C-1 |
| 1st row | C | C+1 | ... | 2C-1 |
| ... | ... | ... | ... | ... |
| Pth row | PC | PC+1 | ... | PC+C-1 |
| ... | ... | ... | ... | ... |
| 2Pth row | 2PC | 2PC+1 | ... | 2PC+C-1 |
| ... | ... | ... | ... | ... |
| last row | (R-1)C | (R-1)C+1 | ... | RC-1 |

## Fig. 4A

410

|  | 0th column | 1st column | ... | last column |
|---|---|---|---|---|
| 0th row | 0 | S | ... | S(C-1) |
| 1st row | SC | SC+S | | SC+S(C-1) |
| ... | ... | ... | ... | ... |
| Pth row | 1 | S+1 | ... | S(C-1)+1 |
| ... | ... | ... | ... | ... |
| 2Pth row | S-1 | 2S-1 | ... | S(C-1)+2 |
| ... | ... | ... | ... | ... |
| last row | ... | ... | ... | RC-1 |

## Fig. 4B

Receive Input File Having Frame Rate Different Than
Output Frame Rate

500

Initiate Solving System of Linear Equations $Ax = b$

505

Generate Matrix A, Vector b, and First Estimation of
Solution to System of Linear Equations Vector $x_1$

510

Multiply $A$ by $x_1$, Elements of $x_1$ Multiplied In An Order
Different From The Order In Which The Elements Are
Arranged In $x_1$.

515

Generate Second Vector $x_2$ Estimation of Solution to
System of Linear Equations

520

Difference
Too Large
Set $x_2=x_1$

Determine Difference Between First and Second Vector
Estimations $x_1$ and $x_2$

525

Difference
Small

Set Solution to System of Linear Equations

530

Generate Interpolated Frames Using Solution to System
of Linear Equations

535

Output Video File at Appropriate Output Frame Rate

540

Store Video File at Output Frame Rate

545

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Microprocessors, IA-32 Intel® Architecture Software Developer's Manual (Volume 3: System Programming Guide). April 2005, vol. 3